# EUROPÄISCHE PATENTSCHRIFT

(11) **EP 1 608 525 B1**
(45) Veröffentlichungstag und Bekanntmachung des Hinweises auf die Patenterteilung: **26.07.2006**
(21) Anmeldenummer: 04722153.6
(22) Anmeldetag: 20.03.2004
(51) Int. Cl.: B60W 10/30, F16D 48/06

(54) **VERFAHREN ZUM BETRIEB EINES ANTRIEBSSTRANGS ZUM ANTRIEB EINES MOBIL-FAHRZEUGS**
METHOD FOR ACTUATING AN ENGINE ASSEMBLY FOR DRIVING A MOTOR VEHICLE
PROCEDE POUR FAIRE FONCTIONNER UN ENSEMBLE MOTEUR SERVANT A L'ENTRAINEMENT D'UN VEHICULE AUTOMOBILE

(30) Priorität: 28.03.2003 DE 10314337
(43) Veröffentlichungstag der Anmeldung: 28.12.2005
(73) Patentinhaber: ZF FRIEDRICHSHAFEN AG, 88038 Friedrichshafen (DE)
(72) Erfinder: LEBER, Fritz, 88048 Friedrichshafen (DE); LEGNER, Jürgen, 88048 Friedrichshafen (DE)
(86) Internationale Anmeldenummer: PCT/EP2004/002944
(87) Internationale Veröffentlichungsnummer: WO 2004/085192

(56) Entgegenhaltungen:
- DE-A- 10 126 080
- DE-A- 19 521 458
- US-A- 3 621 955
- US-A- 6 019 202

## Beschreibung

Die Erfindung bezieht sich auf ein Verfahren zum Betrieb eines Antriebsstrangs nach der im Oberbegriff von Anspruch 1 näher definierten Art.

Gattungsgemäße Antriebsstränge befinden sich vorzugsweise in Arbeitsmaschinen, wie Stapler, Telehandler, Radlader oder Grader. Insbesondere bei Stapler, Telehandler oder Grader besteht die Notwendigkeit, eine vom Fahrer vorgegebene Fahrgeschwindigkeit konstant zu halten. Ebenso besteht die Forderung, die Zugkraft.des Fahrzeugs zu begrenzen. Bei Arbeitsmaschinen treibt eine Antriebsmaschine einerseits den Fahrantrieb über den hydrodynamischen Drehmomentwandler und andererseits einen Nebenabtrieb für beispielsweise die Arbeitshydraulik an. Benötigt die Arbeitshydraulik vermehrt Leistung, so wird häufig die Drehzahl der Antriebsmaschine angehoben, wodurch sich ebenfalls die Betriebsbedingungen des hydrodynamischen Drehmomentwandlers verändern. Dies erschwert zusätzlich das Bewegen des Fahrzeugs mit konstanter Fahrgeschwindigkeit.

Die gattungsbildende DE 195 21 458 A1 offenbart eine elektrohydraulische Steuervorrichtung für den Antrieb einer Maschine. Hierbei hat der Fahrer ein erstes Pedal, mit welchem er die Drehzahl der Antriebsmaschine erhöhen kann, und ein zweites Pedal, mit welchem er eine Kupplung zwischen der Antriebsmaschine und einem Pumpenrad des hydrodynamischen Drehmomentwandlers in einen Schlupfzustand bringen kann. Um nun ausreichend Drehzahl für die Arbeitshydraulik bereitzustellen, wird einerseits das Pedal für die Drehzahl der Antriebsmaschine betätigt, und um gleichzeitig die Geschwindigkeit des Fahrzeugs zu reduzieren, wird gleichzeitig das Pedal zur Deaktivierung der Kupplung zwischen der Antriebsmaschine und dem Pumpenrad gedrückt. Ein Einstellen einer konstanten Fahrgeschwindigkeit ist nahezu unmöglich.

Der vorliegenden Erfindung liegt die Aufgabe zugrunde, die Fahrgeschwindigkeit bei einem Fahrzeug mit hydrodynamischem.Drehmomentwandler und Nebenabtrieb nahezu konstant zu halten.

Die Aufgabe wird mit einem, auch die kennzeichnenden Merkmale des Hauptanspruchs aufweisenden Verfahren zum Betrieb eines Antriebsstrangs gelöst.

Erfindungsgemäß befindet sich zwischen der Antriebsmaschine und dem Pumpenrad des hydrodynamischen Drehmomentwandlers eine Kupplung. Diese Kupplung kann innerhalb des hydrodynamischen Drehmomentwandlers oder separat vor bzw. hinter dem hydrodynamischen Drehmomentwandler angeordnet sein. Die Antriebsmaschine treibt zusätzlich mindestens einen Nebenabtrieb an, welcher vorzugsweise als hydraulische Pumpe ausgebildet ist. Die Kupplung zwischen der Antriebsmaschine und dem Pumpenrad wird so angesteuert, dass unabhängig von der Drehzahl der Antriebsmaschine eine aktuelle Geschwindigkeit des Mobil-Fahrzeugs einer Geschwindigkeitsvorgabe entspricht. Hierbei wird vorzugsweise am Antrieb oder am Abtrieb des schaltbaren Getriebes, welches dem hydrodynamischen Drehmomentwandler nachgeschaltet angeordnet ist, oder an Gelenkwellen oder den Fahrzeugrädern Drehzahlsensoren angeordnet, aus dessen Signalen eine elektronische Steuereinheit die aktuelle Fahrgeschwindikeit ermittelt. Diese aktuelle Fahrgeschwindigkeit wird mit einer Soll-Fahrgeschwindigkeit, welche beispielsweise von der elektronischen Steuereinheit von einem Signal eines Fahrpedals ermittelt wird, verglichen. Anschließend wird die Kupplung zwischen dem Pumpenrad und der Antriebsmaschine so angesteuert, dass die aktuelle Geschwindigkeit der Geschwindigkeitsvorgabe entspricht. Die Drehzahl der Antriebsmaschine kann hierbei direkt von der Anforderung des Nebenabtriebs gesteuert sein. Dies kann beispielsweise dergestalt erfolgen, dass die elektronische Steuereinheit die Antriebsmaschine ansteuert, wobei die elektronische Steuereinheit das Ansteuerungssignal aus Signalen, welche beispielsweise aus den Steuerelementen der Arbeitshydraulik stammen, erzeugt. Somit ist es möglich, das Fahrzeug mit konstanter Fahrgeschwindigkeit zu betreiben und der Arbeitshydraulik veränderbare Antriebsdrehzahlen bereitzustellen.

In einer weiteren Ausgestaltungsform besteht die Möglichkeit, die Zugkraft des Fahrzeugs zu begrenzen, damit sich die Fahrzeugräder bei zu großem Fahrwiderstand nicht in den Untergrund eingraben. Dies ist insbesondere bei Gradern von großer Bedeutung. Die Begrenzung der Zugkraft und somit des Drehmoments wird vorzugsweise dadurch gelöst, dass die Kupplung zwischen der Antriebsmaschine und dem Pumpenrad so angesteuert wird, dass unabhängig von der Drehzahl der Antriebsmaschine ein aktuelles Drehmoment des Turbinenrades des hydrodynamischen Drehmomentwandlers eine zuvor definierte Drehmomentvorgabe nicht überschreitet. Das Drehmoment des Turbinenrades kann beispeilsweise durch Drehmomentsensoren am Turbinenrad oder an den dem Turbinenrad nachfolgenden Bauteilen ermittelt werden. Es besteht jedoch auch die Möglichkeit, das Drehmoment rechnerisch zu ermitteln, wobei die Abtriebsdrehzahl des hydrodynamischen Drehmomentwandlers und die Antriebsdrehzahl des hydrodynamischen Drehmomentwandlers sowie die Drehzahl des Pumpenrades berücksichtigt werden. Insbesondere durch die Ermittlung oder Messung der Drehzahl des Pumpenrades kann aus der Wandlerkennung das Drehmoment exakt ermittelt werden.

Soll die Fahrgeschwindigkeit konstant gehalten werden und das Fahrzeug befindet sich auf einer Gefällstrecke und somit im Schubbetrieb, kann zusätzlich automatisiert die Betriebsbremse des Fahrzeugs zugeschaltet werden.

Befindet sich die Kupplung zwischen der Antriebsmaschine und dem Pumpenrad innerhalb des Wandlergehäuses und wird diese Kupplung über einen Kolben betätigt, so wirkt auf den Kolben einerseits die Betätigungskraft und andererseits der Wandlerinnendruck. Um die Kupplung exakt im Schlupfbetrieb betreiben zu können und die Betätigungskraft, und somit den Betätigungsdruck, optimal einstellen zu können, wird der Wandlerinnendruck beim Ermitteln des Betätigungsdrucks mitberücksichtigt. Der Wandlerinnendruck kann beispielsweise über einen Drucksensor oder rechnerisch über den Betriebszustand des hydrodynamischen Wandlers ermittelt werden. Der Betätigungsdruck für die Primärkupplung ist vorzugsweise von der elektronischen Steuereinheit über ein Proportionalventil einstellbar.

Der Wandlerinnendruck ist im wesentlichen abhängig von der Pumpendrehzahl, Turbinendrehzahl, Öltemperatur und der durch den Wandler fließenden Ölmenge. Außerdem wird der Wandlerinnendruck auch durch die Öffnungscharakteristika der Ventile vor bzw. nach dem Wandler bestimmt. Die im Wandlerkreislauf auch enthaltenen Durchflußwiderstände, wie z. B. Kühler und Leitungen, müßten bei jeder Fahrzeuginstallation ermittelt werden. Die Öltemperatur könnte über einen Temperatursensor gemessen werden.
Der Ölfluß durch den Wandler wird meist mit einer Zahnradpumpe mit konstantem Verdrängungsvolumen gefördert. Diese Zahnradpumpe wird meist mit der Verbrennungsmotordrehzahl angetrieben. Der Ölfluß könnte rechnerisch mittels dieser Drehzahl ermittelt werden.

Weitere Merkmale sind der Figuren-Beschreibung zu entnehmen.
Es zeigen:

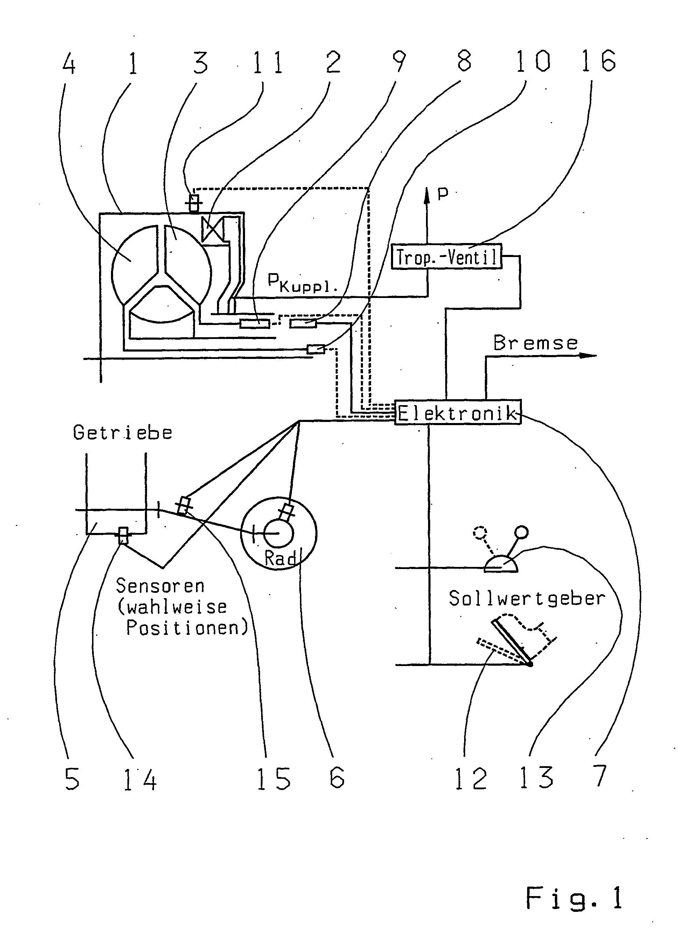

- Fig. 1: einen schematischen Aufbau eines Teils des Antriebsstranges;

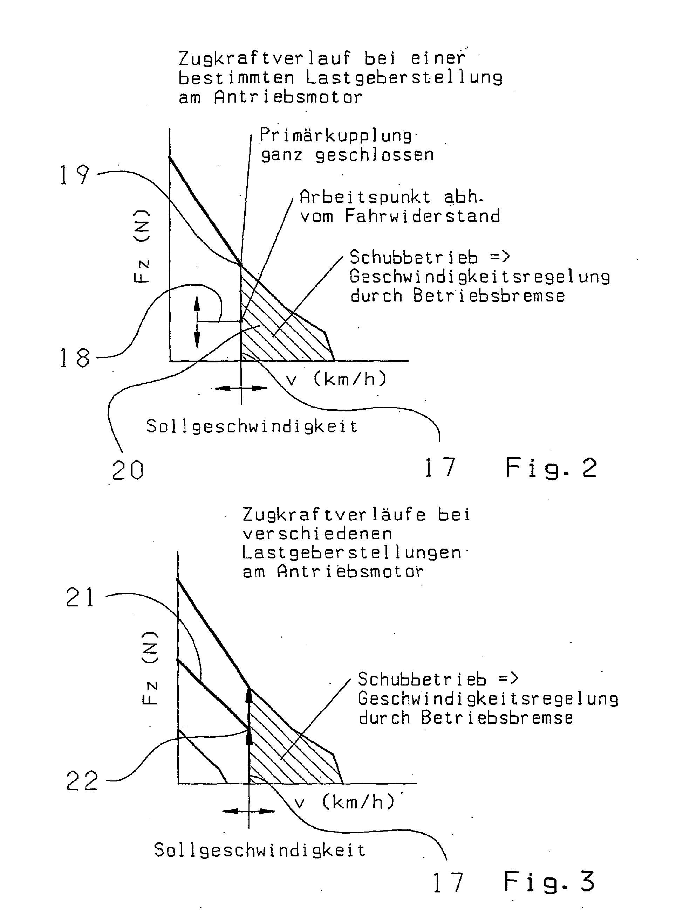

- Fig. 2: ein Zugkraftgeschwindigkeits-Diagramm beim Betrieb mit konstanter Geschwindigkeit;
- Fig. 3: ein Zugkraftgeschwindigkeits-Diagramm beim Betrieb mit konstanter Geschwindigkeit bei unterschiedlichen Lasteinstellungen der Antriebsmaschine;

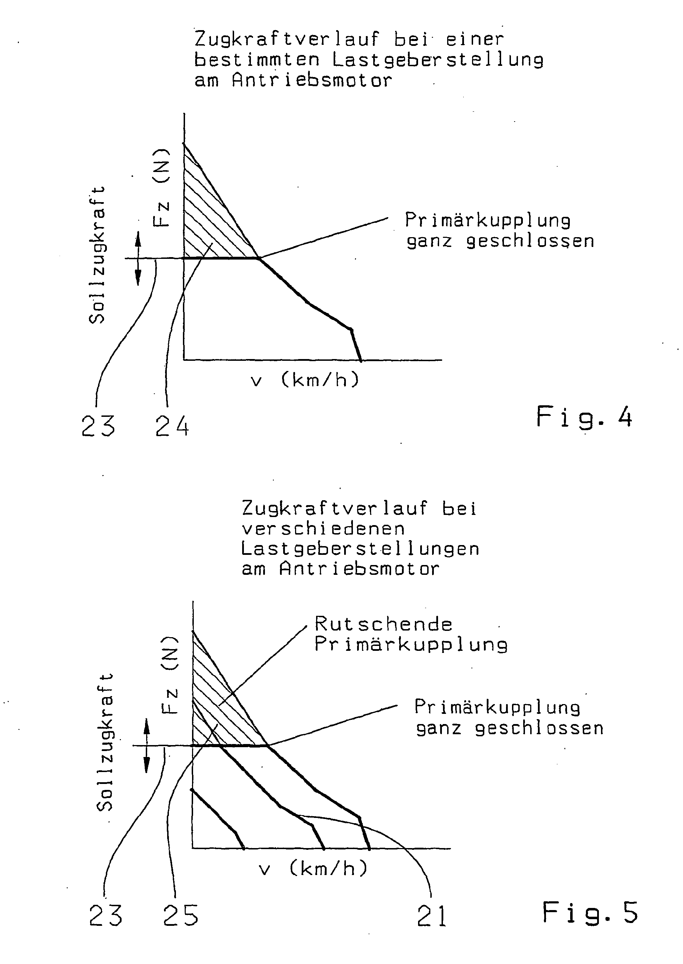

- Fig. 4: ein Zugkraftgeschwindigkeits-Diagramm bei konstanter Zugkraft und
- Fig. 5: ein Zugkraftgeschwindigkeits-Diagramm bei konstanter Zugkraft und unterschiedlichen Lasteinstellungen der Antriebsmaschine.

### Fig. 1:

Eine nicht gezeigte Antriebsmaschine treibt ein Wandlergehäuse 1 an. Mit der Antriebsmaschine ist ein nicht gezeigter Nebenabtrieb, vorzugsweise eine hydraulische Pumpe, verbunden. Eine Kupplung 2 verbindet bei Aktivierung das Pumpenrad des hydrodynamischen Wandlers. Das Pumpenrad treibt bei Rotation ein Turbinenrad 4 an, welches über eine nicht gezeigte Verbindung mit einem Lastschaltgetriebe 5 verbunden ist und dieses antreibt. Das Lastschaltgetriebe 5 treibt Antriebsräder 6 an. Eine elektronische Steuereinheit 7 erfaßt über einen Drucksensor 8 und/oder einen Drehzahlsensor 9 und/oder einen Drehzahlsensor 10 und/oder einen Drehzahlsensor 11 sowie über einen Sensor am Fahrpedal 12 und einen Sensor an dem Steuerhebel der Arbeitshydraulik 13 und/oder einen Drehzahlsensor am Getriebe 14 und/oder einen Drehzahlsensor 15 an der Gelenkwelle zwischen dem Getriebe 5 und dem Antriebsrad 6 den Zustand des Antriebsstrangs. Insbesondere ist bei schleifender Kupplung 2 der Druck im Wandlergehäuse 1 sowie das Drehmoment des Turbinenrades 4 von Bedeutung. Durch Kenntnis der Drehzahl des Pumpenrades 3 und Kenntnis einer Drehzahl des Turbinenrades 4 oder im Antriebsstrang nachgeschalteten Bauteilen sowie weiteren Betriebsparametern des Wandlers kann das Drehmoment des Turbinenrades 4 sowie der Druck innerhalb des Wandlergehäuses 1 rechnerisch ermittelt werden. Gibt der Fahrer über das Fahrpedal 12 eine Geschwindigkeitsvorgabe vor und gleichzeitig wird der Steuerhebel 13 betätigt, so wird die Antriebsmaschine dergestalt eingestellt, dass der Nebenabtrieb ausreichend Leistung für die Arbeitshydraulik erzeugt und gleichzeitig die Kupplung 2 dergestalt betätigt, dass das Fahrzeug auf der gewünschten Geschwindigkeitsvorgabe sich bewegt. Um die Kupplung 2 anzusteuern, gibt die elektronische Steuereinheit 7 ein Signal an ein Proportionalventil 16 aus, welches bereits den Innendruck im Wandlergehäuse 1 berücksichtigt, wodurch das Proportionalventil 16 die Betätigungseinrichtung der Kupplung 2 mit Druck beaufschlagt.

### Fig. 2:

Stellt der Fahrer eine Geschwindigkeit 17 ein, welche konstant gehalten werden soll, so stellt sich eine Zugkraft 18, welche abhängig vom Fahrwiderstand ist, ein, indem die Kupplung zwischen der Antriebsmaschine und dem Pumpenrad mehr oder weniger geöffnet wird. Im Punkt 19 ist die Kupplung vollständig geschlossen. Bewegt sich das Fahrzeug aufgrund eines Gefälles in den Bereich 20, so kann die konstante Geschwindigkeit durch Aktivieren der Betriebsbremse gehalten werden.

### Fig. 3:

Das Fahrzeug befindet sich auf der konstanten Geschwindigkeit 17, wobei die Kupplung zwischen der Antriebsmaschine und dem Pumpenrad des hydrodynamischen Wandlers, je nach geforderter Zugkraft (FZ), betätigt wird. Bei einer mittleren Lastgeberstellung 21 der Antriebsmaschine hält das Fahrzeug die konstante Geschwindigkeit 17 bis zum Punkt 22 und verringert dann die Fahrgeschwindigkeit auf der Leistungslinie der mittleren Lastgeberstellung 21. Hierbei ist die Kupplung zwischen der Antriebsmaschine und dem Pumpenrad geschlossen.

### Fig. 4:

Die vorgewählte maximale Zugkraft 23 begrenzt die Zugkraft des Fahrantriebs. Im Bereich 24 wird die Kupplung zwischen dem Antriebsmotor und dem Pumpenrad so angesteuert, dass am Turbinenrad eine maximale Zugkraft 23 nicht überschritten wird. Die überschüssige Leistung.steht dem Nebenabtrieb zur Verfügung.

### Fig. 5:

Die-Leistungslinie bei einer mittleren Lastgeberstellung 21 und die Vorgabe der maximalen Zugkraft 23 begrenzt einen Bereich 25, innerhalb welchem die Kupplung zwischen der Antriebsmaschine und dem Pumpenrad dergestalt aktiviert wird, dass die maximale Zugkraft 23 nicht überschritten wird. Die überschüssige Leistung steht dem Nebenabtrieb zur Verfügung.

### Bezugszeichen

- 1: Wandlergehäuse
- 2: Kupplung
- 3: Pumpenrad
- 4: Turbinenrad
- 5: Lastschaltgetriebe
- 6: Antriebsräder
- 7: elektronische Steuereinheit
- 8: Drucksensor
- 9: Drehzahlsensor
- 10: Drehzahlsensor
- 11: Drehzahlsensor
- 12: Fahrpedal
- 13: Steuerhebel
- 14: Drehzahlsensor
- 15: Drehzahlsensor
- 16: Proportionalventil
- 17: Geschwindigkeit
- 18: Zugkraft
- 19: Punkt
- 20: Bereich
- 21: mittlere Lastgeberstellung
- 22: Punkt
- 23: maximale Zugkraft
- 24: Bereich
- 25: Bereich

## Patentansprüche

1. Verfahren zum Betrieb eines Antriebsstrangs zum Antrieb eines Mobil-Fahrzeugs mit einer Antriebsmaschine, welcher einerseits über einen hydrodynamischen Drehmomentwandler mit einem Pumpenrad (3) und einem Turbinenrad (4) ein schaltbares Untersetzungsgetriebe (5) zum Antrieb des Fahrantriebs und andererseits einen Nebenabtrieb zum Antrieb mindestens einer hydraulischen Pumpe antreibt, wobei das Pumpenrad (3) über eine Kupplung (2) mit der Antriebsmaschine verbindbar ist und das Turbinenrad (4) mit dem Untersetzungsgetriebe (5) in Verbindung steht, wobei die Geschwindigkeitsvorgabe des Fahrzeugs über ein Fahrpedal (12) einstellbar ist, wobei die Kupplung (2) so angesteuert wird, dass unabhängig von der Drehzahl der Antriebsmaschine eine aktuelle Geschwindigkeit des Mobil-Fahrzeugs einer Geschwindigkeitsvorgabe entspricht, **dadurch gekennzeichnet, dass** die Geschwindigkeitsvorgabe von einem Signal des Fahrpedals (12) ermittelt wird und die Drehzahl der Antriebsmaschine direkt von den Anforderungen des Nebenabtriebs gesteuert ist.

2. Verfahren zum Betrieb eines Antriebsstrangs nach Anspruch 1, **dadurch gekennzeichnet, dass** die Kupplung (2) so angesteuert wird, dass unabhängig von der Drehzahl der Antriebsmaschine ein aktuelles Drehmoment des Turbinenrades (4) eine zuvor definierte Drehmomentvorgabe nicht überschreitet.

3. Verfahren zum Betrieb eines Antriebsstrangs nach Anspruch 1, **dadurch gekennzeichnet, dass** im Schubbetrieb bei Überschreiten der Geschwindigkeitsvorgabe eine Betriebsbremse aktiviert wird.

4. Verfahren zum Betrieb eines Antriebsstrangs nach Anspruch 1, **dadurch gekennzeichnet, dass** die Betriebsbremse dergestalt aktiviert wird, dass die aktuelle Geschwindigkeit der Geschwindigkeitsvorgabe entspricht.

5. Verfahren zum Betrieb eines Antriebsstrangs nach Anspruch 1, **dadurch gekennzeichnet, dass** die Kupplung (2) in Abhängigkeit der Drehzahl der Antriebsmaschine und der Differenz zwischen der aktuellen Geschwindigkeit und der Geschwindigkeitsvorgabe angesteuert wird.

6. Verfahren zum Betrieb eines Antriebsstrangs nach Anspruch 1, **dadurch gekennzeichnet, dass** die Kupplung (2) in Abhängigkeit der Drehzahl der Antriebsmaschine und der Differenz zwischen dem aktuellen Drehmoment und der Drehmomentvorgabe angesteuert wird.

7. Verfahren zum Betrieb eines Antriebsstrangs nach Anspruch 1 oder 2, **dadurch gekennzeichnet, dass** die Kupplung (2) sich innerhalb eines Wandlergehäuses (1) befindet, und von der sich darin befindlichen Flüssigkeit gekühlt wird.

8. Verfahren zum Betrieb eines Antriebsstrangs nach Anspruch 1, **dadurch gekennzeichnet, dass** die Kupplung (2) über eine elektronische Steuereinheit (7) und ein Proportionalventil (16) aktivierbar ist.

9. Verfahren zum Betrieb eines Antriebsstrangs nach Anspruch 1 oder 2, **dadurch gekennzeichnet, dass** die Kupplung (2) von einem Betätigungsdruck aktiviert wird, welcher in Abhängigkeit zu einem aktuellen Druck innerhalb des Wandlergehäuses (1) eingesteltt wird.

10. Verfahren zum Betrieb eines Antriebsstrangs nach Anspruch 1 oder 2, **dadurch gekennzeichnet, dass** die Kupplung sich außerhalb des Wandlergehäuses befindet und von einer Kühlflüssigkeit gekühlt wird.

## Claims

1. Method for operating a drive train for driving a mobile vehicle with a prime mover which drives a manual speed reduction gear (5) via a hydrodynamic torque converter with an impeller (3) and a turbine wheel (4) for driving the travelling drive on the one hand and a power take-off for driving at least one hydraulic pump on the other, wherein the impeller (3) can be connected to the prime mover via a clutch (2), and the turbine wheel (4) is connected to the speed reduction gear (5), wherein the preset speed of the vehicle can be set via an accelerator pedal (12), wherein the clutch (2) is activated such that an actual speed of the mobile vehicle corresponds to a preset speed, irrespective of the speed of the prime mover, **characterised in that** the preset speed is established from a signal of the accelerator pedal (12), and the speed of the prime mover is controlled directly by the requirements of the power take-off.

2. Method for operating a drive train according to Claim 1, **characterised in that** the clutch (2) is activated such that an actual torque of the turbine wheel (4) does not exceed a previously defined preset torque, irrespective of the speed of the prime mover.

3. Method for operating a drive train according to Claim 1, **characterised in that** a service brake is activated in overrun if the preset speed is exceeded.

4. Method for operating a drive train according to Claim 1, **characterised in that** the service brake is activated such that the actual speed corresponds to the preset speed.

5. Method for operating a drive train according to Claim 1, **characterised in that** the clutch (2) is activated in accordance with the speed of the prime mover and the difference between the actual speed and the preset speed.

6. Method for operating a drive train according to Claim 1, **characterised in that** the clutch (2) is activated in accordance with the speed of the prime mover and the difference between the actual torque and the preset torque.

7. Method for operating a drive train according to Claim 1 or 2, **characterised in that** the clutch (2) is located inside a converter housing (1) and is cooled by the fluid contained therein.

8. Method for operating a drive train:according to Claim 1, **characterised in that** the clutch (2) can be activated via an electronic control unit (7) and a proportional valve (16) .

9. Method for operating a drive train according to Claim 1 or 2, **characterised in that** the clutch (2) is activated by an actuating pressure which is set in accordance with an actual pressure inside the converter housing (1).

10. Method for operating a drive train according to Claim 1 or 2, **characterised in that** the clutch is located outside of the converter housing and is cooled by a cooling fluid.

## Revendications

1. Procédé pour faire fonctionner un ensemble moteur servant à l'entraînement d'un véhicule mobile avec un moteur d'entraînement qui entraîne d'une part, par l'intermédiaire d'un convertisseur de couple hydrodynamique avec une roue de pompe (3) et une roue de turbine (4), un démultiplicateur enclenchable (5) servant à l'entraînement du système de propulsion et d'autre part une prise de force servant à l'entraînement d'au moins une pompe hydraulique, dans lequel la roue de pompe (3) peut être reliée par l'intermédiaire d'un embrayage (2) au moteur d'entraînement et la roue de turbine (4) est en relation avec le dérriultiplicateur (5), dans lequel la vitesse spécifiée du véhicule peut être réglée par l'intermédiaire d'une pédale d'accélérateur (12), dans lequel l'embrayage (2) est ajusté de telle manière qu'une vitesse effective du véhicule mobile corresponde à la vitesse prédéfinie indépendamment du régime du moteur d'entraînement, **caractérisé en ce que** la vitesse prédéfinie est détectée par un signal de la pédale d'accélérateur (12) et le régime du moteur d'entraînement est commandé directement par les exigences de la prise de force.

2. Procédé pour faire fonctionner un ensemble moteur selon la revendication 1, **caractérisé en ce que** l'embrayage (2) est ajusté de telle manière que, indépendamment du régime du moteur d'entraînement, un couple effectif de la roue de turbine (4) ne dépasse, pas un couple spécifié défini précédemment.

3. Procédé pour faire fonctionner un ensemble moteur selon la revendication 1, **caractérisé en ce qu'**en fonctionnement de poussée, un frein de service est actionné quand la vitesse spécifiée est dépassée.

4. Procédé pour faire fonctionner un ensemble moteur selon la revendication 1, **caractérisé en ce que** le frein de service est activé de telle manière que la vitesse effective corresponde à la vitesse spécifiée.

5. Procédé pour faire fonctionner un ensemble moteur selon la revendication 1, **caractérisé en ce que** l'embrayage (2) est ajusté en fonction du régime du moteur d'entraînement et de la différence entre la vitesse effective et la vitesse spécifiée.

6. Procédé pour faire fonctionner un ensemble moteur selon la revendication 1, **caractérisé en ce que** l'embrayage (2) est ajusté en fonction du régime du moteur d'entraînement et de la différence du couple effectif et du couple spécifié.

7. Procédé pour faire fonctionner un ensemble moteur selon la revendication 1 ou 2, **caractérisé en ce que** l'embrayage (2) se trouve à l'intérieur d'un logement (1) de convertisseur et est refroidi par le liquide s'y trouvant.

8. Procédé pour faire fonctionner un ensemble moteur selon la revendication 1, **caractérisé en ce que** l'embrayage (2) peut être activé par l'intermédiaire d'une unité de commande électronique (7) et d'une soupape proportionnelle (16).

9. Procédé pour faire fonctionner un ensemble moteur selon la revendication 1 ou 2, **caractérisé en ce que** l'embrayage (2) est activé par une pression d'actionnement qui est réglée en fonction d'une pression effective à l'intérieur du logement (1) de convertisseur.

10. Procédé pour faire fonctionner un ensemble moteur selon la revendication 1, **caractérisé en ce que** l'embrayage se trouve à l'extérieur du logement de convertisseur et est refroidi par un liquide de refroidissement.
